(19) Europäisches Patentamt
European Patent Office
Office européen des brevets

(11) **EP 1 096 233 A2**

(12) **EUROPÄISCHE PATENTANMELDUNG**

(43) Veröffentlichungstag:
**02.05.2001 Patentblatt 2001/18**

(51) Int. Cl.⁷: **G01D 3/032**

(21) Anmeldenummer: **00121066.5**

(22) Anmeldetag: **28.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.10.1999 DE 19951817**

(71) Anmelder: **Micronas GmbH**
**79108 Freiburg (DE)**

(72) Erfinder:
**Motz, Mario, Dipl.-Ing.**
**9241 Wernberg (AT)**

(74) Vertreter:
**Patentanwälte**
**Westphal, Mussgnug & Partner**
**Waldstrasse 33**
**78048 Villingen-Schwenningen (DE)**

(54) **Zwei-Draht-Sensoranordnung**

(57) Es wird eine Sensoranordnung vorgestellt mit einer Zwei-Draht-Leitung (3) zur Stromversorgung und Signalübertagung, einem Sensorelement (1) zum Umwandeln einer an ihm auftretenden physikalischen Größe in ein entsprechendes elektrisches Sensorsignal und einer zwischen beide geschalteten Ansteuereinrichtung (2) zur Speisung des Sensorelements (1). Weiterhin ist eine dem Sensorelement (1) nachgeschaltete Auswerteeinrichtung (4) und eine an die Zwei-Draht-Leitung (3) angeschlossene und durch die Auswerteeinrichtung (4) gesteuerte Stromeinprägung (6) zur Erzeugung eines von der physikalischen Größe abhängigen Stromes vorgesehen. Die Ansteuereinrichtung (2) ist mit dem Sensorelement (1) thermisch gekoppelt und erzeugt mindestens ein Korrektursignal für die Stromeinprägung (6) derart, daß sich der von der Stromeinprägung (6) erzeugte Signalstrom und der Versorgungstrom für die Ansteuereinrichtung (2) und/oder die Auswerteeinrichtung (4) über die Temperatur entgegengesetzt verhalten.

Fig. 1

EP 1 096 233 A2

**Beschreibung**

Die Erfindung betrifft eine Sensoranordnung mit einer Zwei-Draht-Leitung zur Stromversorgung und Signalübertagung.

Beispielsweise in der Automobil-, Automatisierungs- und Prozesstechnik ist es häufig notwendig, Meßwerte zunächst mittels an unterschiedlichen Orten angebrachten Sensoranordnungen zu erfassen und die Meßwerte dann zentral weiterzuverarbeiten. Dabei muß zum einen jede Sensoranordnung mit Strom versorgt und zum anderen müssen die ermittelten Meßwerte von den Sensoranordnungen zu einer Zentralstelle übertragen werden. Insbesondere bei einer Vielzahl von Sensoranordnungen und/oder bei größeren Entfernungen zwischen Sensoranordnung und Zentralstelle ist es wünschenswert, den Versorgungsstrom in eine Richtung und den Meßwert in die entgegengesetzte Richtung über die selbe Zwei-Draht-Leitung zu übertragen, um Leitungsaufwand zu sparen.

Bisherige Lösungsvorschläge sehen vor, daß ein Versorgungsgleichstrom über eine Zwei-Draht-Leitung von der Zentralstelle zur Meßstelle geführt wird, wobei die Sensoranordnung den Strom in dem so gebildeten Stromkreis in Abhängigkeit vom Meßwert einstellt. Begrenzt wird der Bereich, innerhalb dessen der Strom einstellbar ist, nach unten hin durch die Eigenstromaufnahme der Sensoranordnung und nach oben hin durch den maximal zulässigen Strom im Stromkreis.

Die bisherigen Lösungen haben aber den Nachteil, daß sie entweder eine relativ große Krümmung des Stromverlaufs über die Temperatur aufweisen oder große Toleranzen bei den Strömen haben oder individuell abgeglichen werden müssen. Die großen Toleranzen ergeben sich insbesondere durch unterschiedliche Toleranzen und Temperaturverläufe von einander getrennter Schaltungsteile.

Aufgabe der Erfindung ist es, eine Sensoranordnung mit Stromausgang für Zwei-Draht-Anwendungen bereitzustellen, die über weite Bereiche eine geringere Temperaturabhängigkeit aufweist.

Die Aufgabe wird gelöst durch eine Sensoranordnung gemäß Patentanspruch 1. Ausgestaltungen und Weiterbildungen des Erfindungsgedankens sind Gegenstand von Unteransprüchen.

Erfindungsgemäß wird eine Sensoranordnung, insbesondere Hall-Sensoranordnung mit Stromausgang für Zwei-Draht-Anwendungen bereitgestellt, bei der die Unterdrückung der Temperatur-abhängigkeit verbessert ist. Insbesondere werden Temperaturabhängigkeiten von höherer Ordnung (als linear) unterdrückt. Dabei sind jedoch keine Abgleichmaßnahmen notwendig. Das Temperaturverhalten ist darüber hinaus gegenüber technologischen Einflüssen unempfindlich. Die Sensoranordnung eignet sich in besonderem Maße für die Integration in einem einzigen Halbleiter-Chip.

Die erfindungsgemäße Sensoranordnung mit einer Zwei-Draht-Leitung zur Stromversorgung und Signalübertagung umfaßt unter anderem ein Sensorelement zum Umwandeln einer an ihm auftretenden physikalischen Größe in ein entsprechendes elektrisches Sensorsignal. Zwischen die Zwei-Draht-Leitung und das Sensorelement ist eine Ansteuereinrichtung geschaltet, die speziell aufbereite Spannungen/Ströme zur Versorgung des Sensorelements bereitstellt. Dem Sensorelement ist seinerseits eine Auswerteeinrichtung nachgeschaltet. Diese steuert eine ausgangsseitig an die Zwei-Draht-Leitung angeschlossene Stromeinprägung und zwar so, daß die Stromeinprägung einen von der physikalischen Größe am Sensorelement abhängigen Strom einstellt. Die Ansteuereinrichtung ist dabei mit dem Sensorelement thermisch gekoppelt und erzeugt demnentsprechend mindestens ein Korrektursignal für die Stromeinprägung derart, daß zumindest sich der von der Stromeinprägung erzeugte Signalstrom und der Versorgungstrom für die Ansteuereinrichtung und/oder die Auswerteeinrichtung über die Temperatur entgegengesetzt verhalten.

Bevorzugt sind Ansteuereinrichtung und Sensorelement so ausgebildet, daß der Versorgungsstrom für die Ansteuereinrichtung und/oder die Auswerteeinrichtung und der von der Stromeinprägung eingestellte Signalstrom betragsmäßig den gleichen Temperaturkoeffizienten haben, um eine im wesentlichen vollständige Temperatur-kompensation zu erzielen.

Die Ansteuereinrichtung kann dazu eine Band-Gap-Referenz zur Erzeugung von Signalen mit bestimmten Temperaturkoefizienten umfassen. Aus den von der Band-Gap-Referenz erzeugten, temperaturabhängigen und/oder temperaturunabhängigen Signalen können dann Korrektursignale hergeleitet werden, die beispielsweise mit dem Versorgungsstrom des Sensorelements und/oder dem Signalstrom verknüpft werden. Die Band-Gap-Referenz ihrerseits kann einen Band-Gap-Widerstand enthalten, der mit dem Sensorelement thermisch gekoppelt ist und bevorzugt den selben Temperaturkoeffizienten wie das Sensorelement hat.

Weiterhin können die Ansteuereinrichtung, die Auswerteeinrichtung und/oder die Stromeinprägung durch Bias-Signale mit bestimmten Temperaturkoeffizienten angesteuert werden, welche beispielsweise wie die Korrektursignale aus den von der Band-Gap-Referenz erzeugten, temperaturabhängigen und/oder temperaturunabhängigen Signalen erzeugt werden.

Vorteilhafterweise können zumindest die Ansteuereinrichtung und das Sensorelement in einer integrierten Schaltung enthalten sein. Dadurch wird eine zuverlässige thermische Kopplung zwischen Sensorelement und Ansteuereinrichtung ermöglicht. Im Sinne einer größeren Platzerspamis, einer einfacheren Herstellung und gegebenenfalls einer weiteren thermischen Kompensation können aber auch andere Teile der Sensoranordnung wie beispielsweise die Auswerteeinrichtung und die Stromeinprägung mitintegriert werden.

Bevorzugt weisen bei einer integrierten Ausführung das Sensorelement und der Band-Gap-Widerstand identische Wannenwiderstände auf. Damit wird zum einen ein im wesentlichen identischer Temperaturkoeffizient bei beiden realisiert und zum anderen wird auch ein technologischer Gleichlauf erzielt, das heißt, daß sich beispielsweise produktions- und/oder materialbedingte Schwankungen auf den Band-Gap-Widerstand und das Sensorelement in gleichem Umfang auswirken und daher sich in idealer Weise kompensieren.

Die Herleitung der Bias- und/oder Korrektursignale wird bevorzugt mittels Analogrecheneinrichtungen durchgeführt, wobei insbesondere die Operationen Addieren, Subtrahieren und Multiplizieren angewendet werden. Diese Operationen sind mittels Analogtechnik mit hoher Genauigkeit und geringer Temperaturabhängigkeit verhältnismäßig einfach zu realisieren.

Zudem kann die Analogrecheneinrichtung Mittel zur Durchführung mindestens einer nichtlinearen Operation (wie beispielsweise Translinear-Schaltungen) aufweisen. Mit Hilfe einer nichtlinearen Operation läßt sich vorteilhafterweise mit geringem Aufwand eine starke Krümmung des Temperaturverlaufs (beispielsweise des Sensorelements) ausgleichen. Als nichtlineare Operation wird bevorzugt eine Quadrierung durchgeführt, so daß die Temperaturabhängigkeit bis zu Termen zweiter Ordnung kompensiert werden kann.

Demgemäß kann die Analogrecheneinrichtung beispielsweise ein Referenzsignal und ein Eingangssignal erhalten und daraus mindestens ein Korrektursignal errechnen derart, daß das Eingangssignal quadriert und durch das Referenzsignal geteilt wird, wobei das Referenzsignal dem Band-Gap-Strom und das Eingangssignal dem Quotienten aus einer Band-Gap-Spannung und dem Wannenwiderstand entspricht.

Neben einer analogen Übertragung des Meßsignals kann dieses auch diskret übertragen werden. Die Auswerteeinrichtung weist dazu bevorzugt einen Komparator auf, der das Sensorsignal mit mindestens einem Schwellenwert vergleicht und abhängig vom Vergleichsergebnis die Stromeinprägung auf einen von mindestens zwei Strompegeln einstellt. Dadurch können bestimmte Zustände am Sensor ohne großen Aufwand und mit hoher Genauigkeit erfaßt und über die Zwei-Draht-Leitung übertragen werden.

Obwohl sich die erfindungsgemäße Sensoranordnung bei allen Arten von Sensorelementen anwendbar ist, eignet sie sich jedoch insbesondere für Hall-Sensorelemente.

Ausgestaltungen der erfindungsgemäßen Sensoranordnung mit einem oder mehreren der oben beschriebenen Merkmale zeichnen sich insgesamt dadurch aus, daß die Dimensionierung der Abgleichparameter nur einmalig für alle und nicht individuell für jede einzelne Sensoranordnung bzw. integrierte Schaltung erfolgt. Die verbleibende Streuung der Signalströme bei kontinuierlicher Signalübertragung bzw. der Strompegel bei diskreter Signalübertragung ist (beispielsweise bei erster und zweiter Ordnung) nur von der Streuung eines einzigen Parameters (zum Beispiel des Wannenwiderstandes) abhängig. Die Anordnung nutzt effizient den im Low-Pegel-Zustand zur Verfügung stehenden Strom für die Analogschaltungsteile und das (Hall-) Sensorelement, wodurch die Genauigkeit der Sensoranordnung verbessert wird. Ein ansonsten erforderlicher Stromvorhalt für einen Shuntregler würde die Grundgenauigkeit der Sensoranordnung verschlechtern, wenn andere Bias- und Korrekturströme verwendet würden. Durch die Art der Gewinnung von Bias- und Korrekturströmen bleiben auch bei sehr niedrigen Versorgungsspannungen die erzeugten Konstantströme gleich, selbst wenn die interne Referenzspannung (=Analogversorgungsspannung) nicht mehr aufgebracht werden kann.

Das Toleranzfeld für die Ausgangsströme wird also nicht durch Spannungsabhängigkeiten und systematische Temperaturabhängigkeiten vorgegeben, sondern nur durch die Streuungen eines einzelnen Paralmeters (Wannenwiderstand) bestimmt. Die relativ gemessene Temperaturabhängigkeit und die nichtlineare Kennlinie des Wannenwiderstandes vergrößert nicht den Toleranzbereich. Der Wannenwiderstand selbst kann mit relativ geringen Prozess-Streuungen hergestellt werden. Somit sind ein Individualabgleich und ein Abgleich im Temperaturbereich nicht notwendig. Es sind folglich Spezialprozesse vermeidbar, die zwar Hochschichtwiderstände mit geringen Temperaturkoeffizienten ermöglichen, jedoch einen Abgleich erfordern.

Wird trotz der geringen Toleranzen eine weitere Einschränkung des Toleranzbereiches gewünscht, so ist das mit sehr wenigen Abgleichpunkten möglich (vorzugsweise durch Veränderung der Stromspiegel der Quasi-Konstantströme). Außerdem sind auch Multiplikatiollsstellen in den Strompfaden möglich. Die Einstellung dieser Multiplikationsstellen kann auf dem Wafer erfolgen. Als Multiplikationsstellen können Fuseable Links, gezappte Zenerdioden, OTPs, elektrisch löschbare Permanentspeicher (EEPROMS), Anti-Fuses oder Thyristor-Brennelemente verwendet werden. Durch Maskenabgleich sind verschiedene Strompegel mit hoher Temperaturstabilität einstellbar. Die Anzahl und Bit-Breite der Korrekturwerte kann je nach Anforderungen minimal gehalten werden. In den meisten Fällen sind mit den vorgegebenen Toleranzen des Wannenwiderstandes und der Strompegel nur zwei Bit nötig. Gegenüber herkömmlichen Lösungen ist eine Einengung der Toleranzen um den Faktor zwei bis fünf möglich. Mit den durch die Erfindung realisierbaren Betriebsspannungs- und Technologietoleranzen lassen sich insbesondere eng definierte Strompegel erzeugen wie beispielsweise zur Signalisierung eines erkannten magnetischen Aus- oder Einzustandes.

Die Erfindung wird nachfolgend anhand des in den Figuren der Zeichnung dargestellten Ausführungsbeispiels näher erläutert. Es zeigt:

Figur1       das Schaltbild einer Ausführungsform einer erfindungsgemäßen Sensoranordnung,

Figur 2       das Schaltbild einer analogen Recheneinrichtung zur Durchführung einer nichtlinearen Operation bei der Ausführungsform nach Figur 1 und

Figur 3       den Verlauf einzelner Bias- und Korrektursignale über die Temperatur bei der Ausführungsform nach Figur 1.

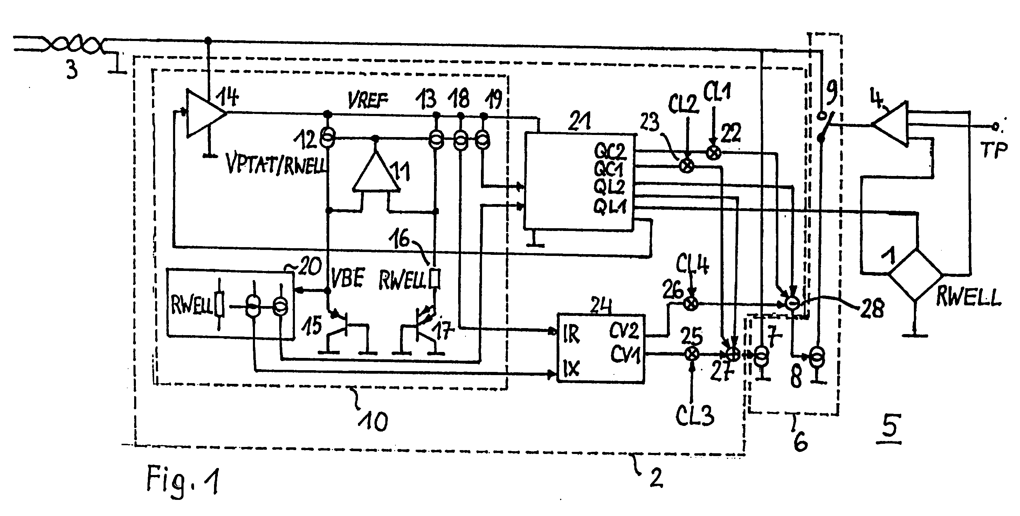

Bei dem in Figur 1 gezeigten Ausführungsbeispiel ist eine Hall-Platte 1 als Sensorelement vorgesehen. Die Hall-Platte 1 wird dabei durch eine Ansteuereinrichtung 2 gespeist, welche ihrerseits über eine Zwei-Draht-Leitung 3 versorgt wird. Die Hall-Spannung über der Hall-Platte 1 wird mittels einer Auswerteeinrichtung in Form eines Komparators 4 abgegriffen und mit einem gegebenen Schwellenwert TP verglichen. Das Ausgangssignal des Komparators 4 dient zur Steuerung einer Stromeinprägung 6, die ebenfalls an die Zwei-Draht-Leitung 3 angeschlossen ist. Mit Ausnahme der Zwei-Draht-Leitung 3 sind sämtliche Elemente in einer integrierten Schaltung 5 untergebracht.

Die Stromeinprägung 6 besteht aus zwei steuerbaren Stromquellen 7 und 8, von denen die eine 7 fest mit der Zwei-Draht-Leitung 3 verbunden ist, während die andere 8 über einen durch den Komparator 4 gesteuerten Schalter 9 auf die Zwei-Draht-Leitung 3 aufschaltbar ist. Die steuerbaren Stromquellen 7 und 8 werden dabei von der Ansteuereinrichtung 2 gesteuert.

Die Ansteuereinrichtung 2 umfaßt eine Band-Gap-Referenz 10, die unter anderem einen Differenzverstärker 11 sowie zwei durch den Differenzverstärker 11 gesteuerte Stromquellen 12 und 13 aufweist. Die beiden Stromquellen 12 und 13 sind jeweils zwischen einen Eingang des Differenzverstärkers 11 einerseits und den eine Spannung VREF abgebenden Ausgang eines über die Zwei-Draht-Leitung 3 gespeisten steuerbaren Regelverstärkers 14 andererseits geschaltet. Einer der beiden Eingänge des Differenzverstärkers 11 ist dabei über einen durch Verbinden von Basis und Emitter zu einer Diode verschalteten Bipolar-Transistor 15 auf einen Anschluß der Zwei-Draht-Leitung 3 geführt. Der andere Eingang des Differenzverstärkers 11 ist unter Zwischenschaltung eines Band-Gap-Widerstandes 16 und eines zu einer durch Verbinden von Basis und Emittern zu einer Diode verschalteten Bipolar-Transistors 17 mit Doppel-Emitter an den einen Anschluß der Zwei-Draht-Leitung 3 angeschlossen. Der Band-Gap-Widerstand 16 ist dabei gleich dem Wannenwiderstand der Hall-Platte 1 und zwar sowohl hinsichtlich des Widerstandswertes RWELL als auch im Hinblick auf dessen technologische und thermische Eigenschaften.

Die Band-Gap-Referenz 10 enthält schließlich noch zwei weitere steuerbare Stromquellen 18 und 19 sowie einen Stromgenerator 20. Die beiden Stromquellen 18 und 19 werden wie die Stromquellen 12 und 13 durch den Differenzverstärker 11 gesteuert und sind dabei jeweils zwischen den Ausgang des Regelverstärkers 14 und einen der Ausgänge der Band-Gap-Referenz 10 geschaltet. Der Stromgenerator 20 erzeugt zwei Ströme, die jeweils dem Verhältnis der Diodenspannung VBE über dem Bipolar-Transistor 15 zum Wannenwiderstand RWELL entsprechen. Dazu kann beispielsweise ein dem Wannenwiderstand der Hall-Platte 1 technologisch, thermisch und im Widerstandswert RWELL übereinstimmender Widerstand im Stromgenerator 20 mit der Diodenspannung VBE beaufschlagt werden und dann der durch diesen Widerstand fließende Strom VBE/RWELL mittels zweier Stromspiegeln (bzw. einer Strombank mit zwei Ausgangszweigen) abgenommen werden. Die vom Stromgenerator 20 so gebildeten Ströme stehen an zwei Ausgängen des Stromgenerators 20 zur Verfügung.

Einer der beiden Ströme des Stromgenerators 20, der durch die Stromquelle 19 eingeprägte Strom und die Spannung am Ausgang des Regelverstärkers 14 werden einer Bias-Schaltung 21 zugeführt, die daraus temperaturunabhängige Bias-Ströme QC1 und QC2, temperaturabhängige Ströme QL1 und QL2 sowie ein Ansteuersignal für den Regelverstärker 14 erzeugt. Die temperatur-unabhängigen Bias-Ströme QC1 und QC2 haben unterschiedliche, konstante Stromstärken und die temperaturabhängigen Ströme QL1 und QL2 nehmen mit steigender Temperatur annähernd linear mit unterschiedlichem Gefälle ab. Unterschiedliche Stromstärkepegel der Ströme QC1 und QC2 werden mittels Koeffizientengliedern 22 und 23 mit Koeffizienten CL1 bzw. CL2 eingestellt. Der andere der beiden Ströme des Stromgenerators 20 sowie der durch die Stromquelle 18 eingeprägte Strom sind an eine Translinear-Schaltung 24 angelegt. Die Translinear-Schaltung 24 erzeugt daraus beispielsweise durch Quadrieren zwei Ströme CV1 und CV2 mit einer stark gekrümmten Temperaturabhängigkeit. Unterschiedliche Basispegel können dabei durch zwei Koeffizientenglieder 25 und 26 mit Koeffizienten CL3 bzw. CL4 festgelegt werden. Die Ströme CV1, QC1 und QL1 werden einem Addierer 27 zugeführt, der daraus durch Summation den Steuerstrom für die Stromquelle 7 in der Stromeinprägung 6 bildet. Die Ströme CV2, QC2 und QL2 werden dagegen einem Subtrahierer 28 zugeführt, der daraus durch Subtraktion des Stromes CV2 von der Summe der Ströme QC2 und QL1 einen Steuerstrom für die Stromquelle 7 erzeugt.

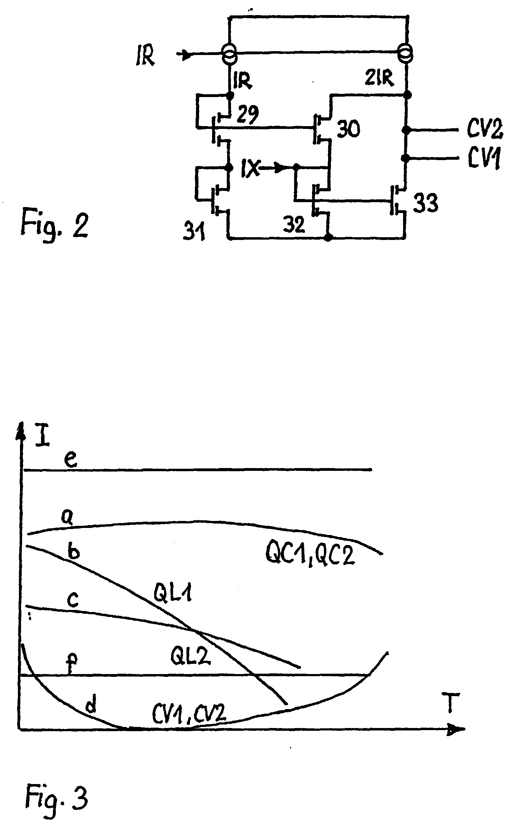

Eine bevorzugte Ausführungsform einer Translinear-Schaltung 24 ist in Figur 2 gezeigt. Diese enthält unter anderem einen MOS-Transistor 29, bei dem Gate-Anschluß und Drain-Anschluß miteinander sowie mit dem Gate-Anschluß eines MOS-Transistors 30 verbunden sind und dessen Source-Anschluß mit den gekoppelten Gate- und Drain-Anschlüssen eines MOS-Transistors 31 verschaltet ist. Der Source-Anschluß des MOS-Transistors 31 ist seinerseits mit den Source-Anschlüssen zweier MOS-Transistoren 32 und 33 verbunden. Beim MOS-Transistor 32 sind Gate- und Drain-Anschluß miteinander sowie mit dem Source-Anschluß des MOS-Transistors 30 und dem Gate-Anschluß des MOS-Transistors 33 verbunden. Der Drain-Anschluß des MOS-Transistors 33 ist schließlich mit dem Drain-Anschluß des MOS-Transistors 30 - Ausgänge der Translinear-Schaltung 24 bildend - verschaltet. In die in Reihe geschalteten Drain-Source-Strecken der MOS-Transistoren 29 und 31 wird dabei ein Strom IR eingespeist, der gleich einem Referenzstrom ist. Ein dem doppelten Referenzstrom entsprechender Strom 2IR wird in die in Reihe geschalteten Drain-Source-Strecken der MOS-Transistoren 30 und 32 sowie die Drain-Source-Strecke des MOS-Transistors 33 eingespeist. Schließlich wird der Gate-Anschluß des MOS-Transistors mit einem Eingangsstrom IX beaufschlagt. Das Signal am Ausgang der Translinear-Schaltung 24 entspricht dabei beispielsweise dem Quadrat des Eingangsstroms IX dividiert durch den achtfachen Referenzstrom IR. Dabei wird gemäß Figur 1 der Eingangsstrom IX vom Stromgenerator 20 und der Referenzstrom IR von der Stromquelle 18 bereitgestellt.

In Figur 3 sind die Verläufe verschiedener Ströme der in den Figuren 1 und 2 gezeigten Ausführungsform über die Temperatur T dargestellt. Die Kurve a gibt dabei den annähernd konstanten (quasi-konstanten) Verlauf des Stroms QC1 bzw. QC2 wieder, der bei mittleren Temperaturen eine zu höheren Strömen hin leicht gekrümmte Form aufweist. Die Kurven b und c beschreiben die Verläufe der quasi-linearen Ströme QL1 und QL2, die mit unterschiedlichen Gefällen zu höheren Temperaturen T hin annähernd linear abfallen. Kurve d bezeichnet schließlich den Verlauf des Stroms CV1 bzw CV2, der bei mittleren Temperaturen eine zu niedrigeren Strömen hin stark gekrümmte, wannenartige Form aufweist. Die einzelnen Ströme QC1, QC2, QL1, QL2, CV1 und CV2 hängen dabei wie folgt von dem Wannenwiderstand RWELL, den Spannungen VPTAT und VBE, der Temperatur T, der absoluten Temperatur $T_o$ und der Boltzmannkonstante k wie folgt ab:

$$QC1 = QC2 = VBE/RWELL(T/T_o)^{1,91} + k \cdot VPTAT/RWELL(T/T_o)^{1,91}$$

$$QL1 = VBE/RWELL(T/T_o)^{1,91}$$

$$QL2 = VPTAT/RWELL(T/T_o)^{1,91}$$

$$CV1 = CV2 = ((VPTAT - VBE)/RWELL(T/T_o)^{1,91})^2 / VPTAT/RWELL(T/T_o)^{1,91}$$

Die Ströme QC1, QC2, CV1 und CV2 lassen sich jeweils einzeln mittels der Koeffizientenglieder 22, 23, 25 und 26 an die jeweiligen Erfordernisse anpassen. Die Kurven e und f bezeichnen schließlich die gewünschten Konstantstrompegel.

Mittels Differenzbildung der aus der Band-Gap-Referenz generierten Ströme werden Quasi-Konstantströme und Ströme mit positivem Temperaturkoeffizienten erzeugt, die als Korrekturströme für die gewünschten Konstantstrompegel zur Verfügung stehen. Diese Kowekturströme haben aber vor allem durch den nichtlinearen Temperaturkoeffizienten des Wannenwiderstands RWELL eine große Krümmung (ca. 10%) über einen Temperaturbereich von beispielsweise -40°C bis 170°C. Auf der anderen Seite ist die Verwendung von Strömen ungünstig, die aus Widerständen mit geringerem nichtlinearen Temperaturkoeffizienten generiert werden. Durch die technologischen Streuungen entstünde ein Ungleichlauf der Bias- und Korrekturströme, der hinsichtlich seines Betrags und seines Temperaturkoeffizienten individuell abgegilchen werden müßte.

Mit Translinear-Schaltungen, deren Referenzeingang mit einem PTAT/RWELL-Strom und deren Signaleingang mit der Differenz von PTAT/RWELL-Strom und VBE/RWELL-Strom beaufschlagt ist, lassen sich Korrekturströme erzeugen, deren Größe und Scheitelpunkt durch entsprechende Dimensionierung gewählt werden kann. Außerdem erreicht man einen technologischen Gleichlauf der Korrektur- und Biasströme. Insbesondere durch Addition/Subtraktion dieser Ströme zu Vielfachen der Band-Gap-Ströme lassen sich temperaturunabhängige Konstantströme an den Anschlüssen der Sensoranordnung und damit auf der Zwei-Draht-Leitung erzeugen.

Bezugszeichenliste

| 1 | Hall-Platte |
| 2 | Ansteuereinrichtung |
| 3 | Zwei-Draht-Leitung |
| 4 | Komparator |
| 5 | Integrierte Schaltung |
| 6 | Stromeinprägung |
| 7 | Gesteuerte Stromquelle |
| 8 | Gesteuerte Stromquelle |

| 9 | Gesteuerter Schalter |
|---|---|
| 10 | Band-Gap-Referenz |
| 11 | Differenzverstärker |
| 12 | Gesteuerte Stromquelle |
| 13 | Gesteuerte Stromquelle |
| 14 | Regelverstärker |
| 15 | Bipolar-Transistor |
| 16 | Band-Gap-Widerstand |
| 17 | Bipolar-Transistor |
| 18 | Gesteuerte Stromquelle |
| 19 | Gesteuerte Stromquelle |
| 20 | Stromgenerator |
| 21 | Bias-Schaltung |
| 22 | Koeffizientenglied |
| 23 | Koeffizientenglied |
| 24 | Translinear-Schaltung |
| 25 | Koeffizientenglied |
| 26 | Koeffizientenglied |
| 27 | Addierer |
| 28 | Subtrahierer |
| 29 | MOS-Transistor |
| 30 | MOS-Transistor |
| 31 | MOS-Transistor |
| 32 | MOS-Transistor |
| 33 | MOS-Transistor |
| VREF | Spannung |
| VPTAT | Spannung |
| RWELL | Wannenwiderstand |
| VBE | Spannung |
| QC1 | Strom |
| QC2 | Strom |
| QL1 | Strom |
| QL2 | Strom |
| IR | Strom |
| 2IR | Strom |
| IX | Strom |
| CV1 | Strom |
| CV2 | Strom |
| I | Strom |
| T | Temperatur |
| TP | Schwellenwert |
| a | Kurve |
| b | Kurve |
| c | Kurve |
| d | Kurve |
| e | Kurve |
| f | Kurve |

**Patentansprüche**

1. Sensoranordnung mit

   einer Zwei-Draht-Leitung (3) zur Stromversorgung und Signalübertagung,
   einem Sensorelement (1) zum Umwandeln einer an ihm auftretenden physikalischen Größe in ein entsprechendes elektrisches Sensorsignal,
   einer zwischen Zwei-Draht-Leitung (3) und Sensorelement (1) geschalteten Ansteuereinrichtung (2) zur Speisung des Sensorelements (1),
   einer dem Sensorelement (1) nachgeschalteten Auswerteeinrichtung (4) und

einer ausgangsseitig an die Zwei-Draht-Leitung (3) angeschlossenen und durch die Auswerteeinrichtung (4) gesteuerten Stromeinprägung (6) zur Erzeugung eines von der physikalischen Größe am Sensorelement (1) abhängigen Stromes, wobei

die Ansteuereinrichtung (2) mit dem Sensorelement (1) thermisch gekoppelt ist und mindestens ein Korrektursignal für die Stromeinprägung (6)erzeugt derart, daß sich der von der Stromeinprägung (6) erzeugte Signalstrom und der Versorgungstrom für die Ansteuereinrichtung (2) und/oder die Auswerteeinrichtung (4) über die Temperatur entgegengesetzt verhalten.

2. Sensoranordnung nach Anspruch 1, bei der der Versorgungsstrom für die Ansteuereinrichtung (2) und/oder die Auswerteeinrichtung (4) und der von der Stromeinprägung (6) eingestellte Signalstrom betragsmäßig den gleichen Temperaturkoeffizienten haben.

3. Sensoranordnung nach Anspruch 1 oder 2, bei der die Ansteuereinrichtung (2) eine Band-Gap-Referenz (10) zur Erzeugung von temperaturabhängigen und/oder temperaturunabhängigen Signalen aufweist, welche ihrerseits zur Erzeugung der Korrektursignale für die Stromeinprägung (6) vorgesehen sind, und bei der die Band-Gap-Referenz (10) mindestens einen mit dem Sensorelement (1) thermisch gekoppelten Band-Gap-Widerstand (16) umfaßt.

4. Sensoranordnung nach einem der vorherigen Ansprüche, bei der die Ansteuereinrichtung (2), die Auswerteeinrichtung (4) und/oder die Stromeinprägung (6) durch Bias-Signale mit bestimmten Temperaturkoeffizienten angesteuert werden.

5. Sensoranordnung nach einem der vorherigen Ansprüche, bei der zumindest die Ansteuereinrichtung und das Sensorelement (1) in einer integrierten Schaltung (5) enthalten sind.

6. Sensoranordnung nach Anspruch 5, bei der das Sensorelement (1) und der Band-Gap-Widerstand (16) identische Wannenwiderstände (RWELL) aufweisen.

7. Sensoranordnung nach einem der vorherigen Ansprüche, bei der die Herleitung der Bias- und/oder Korrektursignale mittels Analogrecheneinrichtungen (22, 23, 24, 25, 26, 27, 28) erfolgt.

8. Sensoranordnung nach Anspruch 7, bei der eine Analogrecheneinrichtung (24) mindestens eine nichtlineare Operationen ausführt.

9. Sensoranordnung nach Anspruch 8, bei der die Analogrecheneinrichtung (24) als nichtlineare Operation eine Quadrierung ausführt.

10. Sensoranordnung nach Anspruch 9, bei der die Analogrecheneinrichtung (24) ein Referenzsignal (IR) und ein Eingangssignal (IX) erhält und daraus mindestens ein Korrektursignal (CV1, CV2) errechnet derart, daß das Eingangssignal (IX) quadriert und durch das Referenzsignal (IR) geteilt wird, wobei das Referenzsignal dem Band-Gap-Strom und das Eingangssignal dem Quotienten aus einer Band-Gap-Spannung und dem Wannenwiderstand (RWELL) entspricht.

11. Sensoranordnung nach einem der vorherigen Ansprüche, bei der die Auswerteeinrichtung (4) mindestens einen Komparator (4) aufweist, der das Sensorsignal mit mindestens einem Schwellenwert (TP) vergleicht und abhängig vom Vergleichsergebnis die Stromeinprägung auf einen von mindestens zwei Strompegeln einstellt.

12. Sensoranordnung nach einem der vorherigen Ansprüche, bei der das Sensorelement (1) ein Hall-Sensorelement (1) ist.

Fig. 1

EP 1 096 233 A2

Fig. 2

Fig. 3